# EUROPEAN PATENT SPECIFICATION

(11) **EP 4 143 490 B1**
(45) Date of publication and mention of the grant of the patent: **15.07.2026**
(21) Application number: 21795413.0
(22) Date of filing: 16.03.2021
(51) Int. Cl.: F25B 31/00, F25B 5/02, F25B 5/04, F04B 39/06, H02P 1/28, F25B 49/02, H02K 5/22, F04B 49/06, F25B 1/053, F25B 1/10, F25B 41/20, H02P 1/52, F04B 35/04, H02K 11/33

(54) **SYSTEM AND METHOD FOR COOLING POWER ELECTRONICS OF REFRIGERANT COMPRESSORS**
SYSTEM UND VERFAHREN ZUM KÜHLEN DER LEISTUNGSELEKTRONIK VON KÄLTEMITTELVERDICHTERN
SYSTÈME ET PROCÉDÉ DE REFROIDISSEMENT DE L'ÉLECTRONIQUE DE PUISSANCE DE COMPRESSEURS FRIGORIFIQUES

(30) Priority: 30.04.2020 US 202063017796 P
(43) Date of publication of application: 08.03.2023
(73) Proprietor: Danfoss A/S, 6430 Nordborg (DK)
(72) Inventor: SUN, Lin Xiang, Tallahassee, Florida 32312 (US); LI, Tianlei, Tallahassee, Florida 32309 (US); PRITCHARD, Brandon Keith, Tallahassee, Florida 32312 (US)
(74) Representative: Marks & Clerk LLP
(86) International application number: PCT/US2021/022462
(87) International publication number: WO 2021/221806

(56) References cited:
- US-A1- 2005 223 730
- US-A1- 2005 223 730
- US-A1- 2007 209 378
- US-A1- 2009 090 113
- US-A1- 2017 131 006
- US-A1- 2019 203 992
- US-B2- 8 544 290
- US-B2- 9 395 106

## Description

### TECHNICAL FIELD

This disclosure relates to refrigerant compressors, and, in particular, relates to cooling for the power electronics of such compressors.

### BACKGROUND

Refrigerant compressors are used to circulate refrigerant in a chiller or heat pump via a refrigerant loop. In addition to the compressor, refrigerant loops are known to include a condenser, an expansion device, and an evaporator. Some compressors provide cooling to the motor and/or associated power electronics by conveying refrigerant from the main loop to the motor and/or the power electronics.

US 2017/131006 A1 describes a refrigerant system including, among other things, a refrigerant loop having at least a condenser, an evaporator, and a compressor. The compressor includes a motor in communication with a variable speed drive. The system further includes a cooling circuit including a pressure regulator downstream of a heat exchanger, the heat exchanger absorbing heat from the variable speed drive.

US 2009/090113 A1 describes a system, compressor, and method that cools an electronics module with a low-pressure refrigerant. The system, compressor, and method utilize a temperature sensor that detects a temperature of the low pressure refrigerant and communicates with the electronics module. Based on the temperature detected by the temperature sensor, the electronics module controls a liquid dry out point of the refrigerant that is used to cool the electronics module.

US 2005/223730 A1 describes a chiller system including a refrigerant loop, the refrigerant loop further including a compressor, an air-cooled condenser arrangement and an evaporator arrangement connected in a first closed refrigerant loop. A motor is connected to the compressor to drive the compressor, a drive is connected to the motor to power the motor and a power/control panel controls the refrigerant loop. The power/control panel and the condenser arrangement are connected in a second closed coolant loop. The second closed coolant loop provides cooling to the enclosure and/or components within the enclosure disposed on a chill plate. Condensation is substantially prevented from forming inside the enclosure, despite the enclosure lacking a humidity control device.

### SUMMARY

Aspects and embodiments of the invention are provided according to the appended claims. A refrigerant system includes, among other things, a main refrigerant loop in communication with a condenser, an evaporator, and a compressor. The refrigerant system further includes at least one cooling line configured to direct refrigerant from the main refrigerant loop to cool a chamber containing electronic components.

A soft start circuit is contained within the chamber.

**In** a further embodiment, the soft start circuit is configured to prevent a sudden current flow during the start of the compressor.

Insulated-gate bipolar transistors (IGBTs) and a silicon-controlled rectifier (SCR) are also within the chamber.

In a further embodiment, a DC-to-DC converter is also within the chamber.

The soft start circuit is arranged vertically above, relative to a ground surface or surface upon which the compressor sits, the IGBTs.

The at least one cooling line includes a first cooling line configured to direct refrigerant to cool the IGBTs and the SCR.

In a further embodiment, the first cooling line includes an electromechanically operated valve selectively opened in response to instructions from a controller, and an orifice downstream of the electromechanically operated valve and upstream of both the IGBTs and the SCR.

The at least one cooling line includes a second cooling line configured to selectively direct refrigerant to cool a motor of the compressor.

In a further embodiment, the at least one cooling line includes a third cooling line configured to direct refrigerant to cool the soft start circuit, and the first, second, and third cooling lines split from a common source such that the first, second, and third cooling lines are arranged in parallel to one another.

In a further embodiment, the common source is the main refrigerant loop.

In a further embodiment, the third cooling line includes a thermal exchange unit.

In a further embodiment, the thermal exchange unit includes an evaporator adjacent a blower.

In a further embodiment, the thermal exchange unit includes one or both of fins and coils.

In a further embodiment, upstream of the thermal exchange unit, the third cooling line includes a flow regulator.

In a further embodiment, the flow regulator is an electronic expansion valve (EXV) selectively opened in response to instructions from the controller based on an output of a temperature sensor arranged in the chamber.

In a further embodiment, the flow regulator is a thermostatic expansion valve (TXV).

In a further embodiment, the flow regulator is provided by one of a fixed orifice or a capillary tube.

In a further embodiment, the refrigerant system is a heating, ventilation, and air conditioning (HVAC) chiller system.

A method according to an exemplary aspect of the present disclosure includes, among other things, directing refrigerant from a main refrigerant loop to cool a chamber of a refrigerant compressor, wherein the chamber contains electronic components including a soft start circuit configured to prevent a sudden current flow during the start of the refrigerant compressor.

### BRIEF DESCRIPTION OF THE DRAWINGS

Figure 1 schematically illustrates an example refrigerant loop.
Figure 2 schematically illustrates an example compressor cooling arrangement.
Figure 3 is a partially sectioned view of an example compressor.
Figure 4 schematically illustrates a first example arrangement of a cooling line for a soft start circuit.
Figure 5 schematically illustrates a second example arrangement of the cooling line for the soft start circuit.
Figure 6 schematically illustrates a third example arrangement of the cooling line for the soft start circuit.
Figure 7 schematically illustrates a fourth example arrangement of the cooling

### DETAILED DESCRIPTION

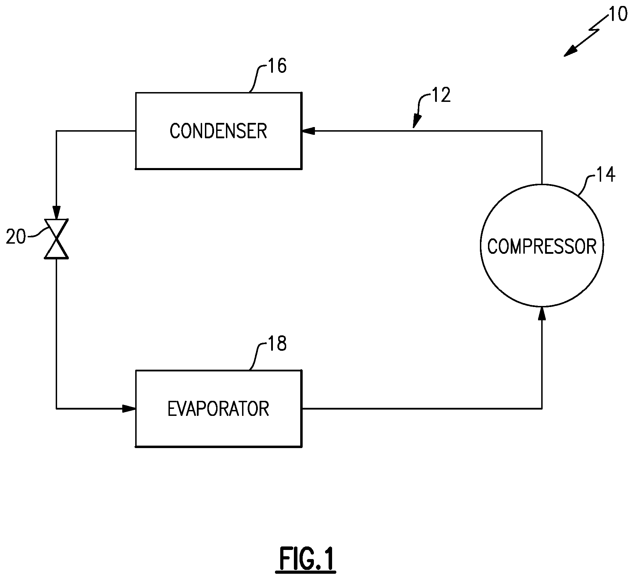

Figure 1 schematically illustrates a refrigerant cooling system 10. The refrigerant system 10 includes a main refrigerant loop, or circuit, 12 in communication with a compressor or multiple compressors 14, a condenser 16, an evaporator 18, and an expansion device 20. This refrigerant system 10 may be used in a chiller or heat pump, for example. While a particular example of the refrigerant system 10 is shown, this disclosure extends to other refrigerant system configurations. For instance, the main refrigerant loop 12 can include an economizer downstream of the condenser 16 and upstream of the expansion device 20. The refrigerant cooling system 10 may be an air conditioning system, for example.

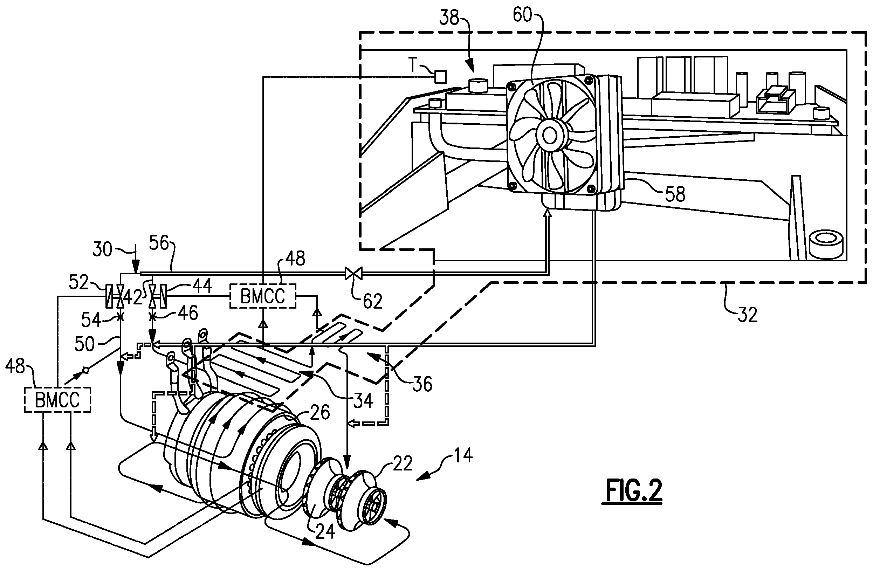

Figure 2 schematically illustrates an example cooling arrangement for a compressor 14 and the associated power electronics. The example compressor 14 is a two-stage centrifugal compressor, including a first impeller 22 upstream of a second impeller 24. Other multiple-stage compressors may be utilized in other embodiments. Each impeller 22, 24 may include an impeller and shroud arrangement or another type of arrangement. The impellers 22, 24 are driven by a motor 26.

The compressor 14 may be cooled by a source of refrigerant 30 from the main refrigerant loop 12 (Figure 1). The source of refrigerant 30, in this example, is configured to cool the motor 26 and the associated power electronics of the compressor 14. The power electronics are schematically illustrated at 32, and include insulated-gate bipolar transistors (IGBTs), and their associated driver and signal conditioning circuits 34, a silicon-controlled rectifier (SCR) 36, and a soft start circuit 38. The power electronics 32 may also include a DC-to-DC converter, among other possible electrical components. The soft start circuit 38 is configured to prevent a sudden current flow during the start of the compressor 14, and, in particular, is configured to slow down the rate of rising output voltage by minimizing the excess current flow during compressor start.

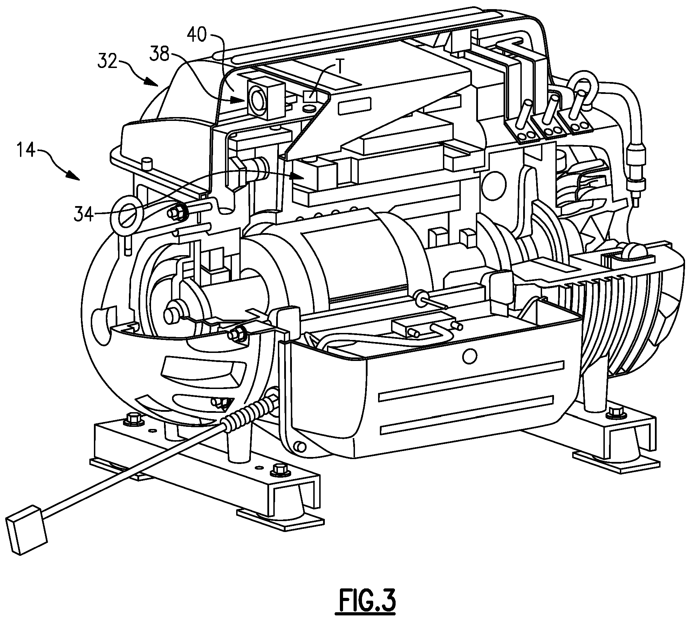

With reference to Figure 3, the soft start circuit 38 may be arranged vertically above, relative to a ground surface or surface upon which the compressor 14 sits, the IGBTs 34. The soft start circuit 38 may be arranged in a top portion of a chamber 40 containing the power electronics 32, which may be referred to as a top chamber. The chamber 40 is part of the compressor 14, in an example. This disclosure provides additional cooling to the top portion of the chamber 40, and in particular to the soft start circuit 38, relative to prior designs. The top portion of the chamber 40 may also include a driver and/or a signal conditioning circuit associated with the IGBTs 34, and may further include a DC-to-DC converter. In that case, this disclosure also provides additional cooling to those components.

With reference to Figure 2, a first cooling line 42 draws cooling fluid from the main refrigerant loop 12 to cool the IGBTs 34 and SCR 36. The first cooling line 42 includes an electromechanically operated valve 44, such as a solenoid valve, and an orifice 46. The valve 44 may be selectively opened and closed in response to instructions from a controller 48. The valve 44 is upstream of the orifice 46, and the orifice 46 is upstream of both the IGBTs 34 and the SCR 36. Downstream of the IGBTs 34 and SCR 36, the first cooling line 42 is configured to return refrigerant to the main refrigerant loop 12 adjacent the inlet to the compressor 14.

The controller 48, illustrated schematically at two locations in Figure 2, may be programmed with executable instructions for interfacing with and operating the various components of the compressor 14. The controller 48 is configured to receive information from the compressor 14 and is configured to interpret that information and issue commands to various components of the compressor 14. The controller 48 may include hardware and software. Further, the controller 48 may additionally include a processing unit and non-transitory memory for executing the various control strategies and modes of the compressor 14.

A second cooling line 50 is configured to selectively direct refrigerant from source 30 to cool the motor 26. The second cooling line 50 includes an electromechanically operated valve 52 selectively opened and closed in response to instruction from the controller 48. The second cooling line 50 also includes an orifice 54. The valve 52 is upstream of the orifice 54, and the orifice 54 is upstream of the motor 26. Downstream of the motor 26, the second cooling line 50 returns refrigerant to the main refrigerant loop 12 near the inlet to the compressor 14.

A third cooling line 56 is configured to direct refrigerant from source 30 to cool the soft start circuit 38 and/or the driver/signal conditioning circuit associated with the IGBTs 34 and/or the DC-to-DC converter. The third cooling line 56 includes a thermal exchange unit 58, which in one example is an evaporator, arranged adjacent a blower, or fan, 60. The thermal exchange unit 58 may include fins and/or coils. Heat is exchanged between the air blown over the thermal exchange unit 58 and the refrigerant within the thermal exchange unit 58 such that the air circulated inside of the top portion of the chamber 40 is substantially cool. As such, increased cooling of the electronics inside of the top portion of the chamber 40 is achieved.

Upstream of the thermal exchange unit 58, the third cooling line 56 includes a flow regulator 62. The flow regulator 62 may be an electronic expansion valve (EXV), thermostatic expansion valve (TXV), or a fixed orifice or capillary tube.

In the example where the flow regulator 62 is an EXV, the temperature of the top chamber (i.e., the portion of chamber 40 adjacent the soft start circuit 38 and above the IGBTs 34) can be actively controlled. In particular, a temperature sensor T (Figures 2 and 3) is located adjacent the top chamber and is configured to generate a signal which can be interpreted by the controller 48 as a temperature of the top portion of the chamber 40. The controller 48 can use the signal from the temperature sensor T to adjust a position of the EXV in real time to regulate the temperature of the soft start circuit 38.

In the example where the flow regulator 62 is a TXV, the temperature of the top chamber can also be actively controlled using the TXV. In that example, active control of the temperature is achieved within the TXV itself by a preset value without the controller 48.

Alternatively, for a lower cost option, flow through the third cooling line 56 is passively controlled when the flow regulator 62 is a fixed orifice or capillary tube. In this example, there is no temperature sensor T.

In another example, the thermal exchange unit 58 is mounted directly on part of the main housing of the compressor 14. The main housing provides a cold sink to absorb the heat in the top cover chamber. In this option, there is no coolant flow to the thermal exchange unit 58.

Downstream of the thermal exchange unit 58, the third cooling line 56 returns refrigerant to the main refrigerant loop 12 at a low pressure location. Example locations include a suction return, a location along the first cooling line 42 downstream of the SCR 36, a location along the second cooling line 50 downstream of the orifice 54 and upstream or downstream of the motor 26, or an inter-stage return, as examples.

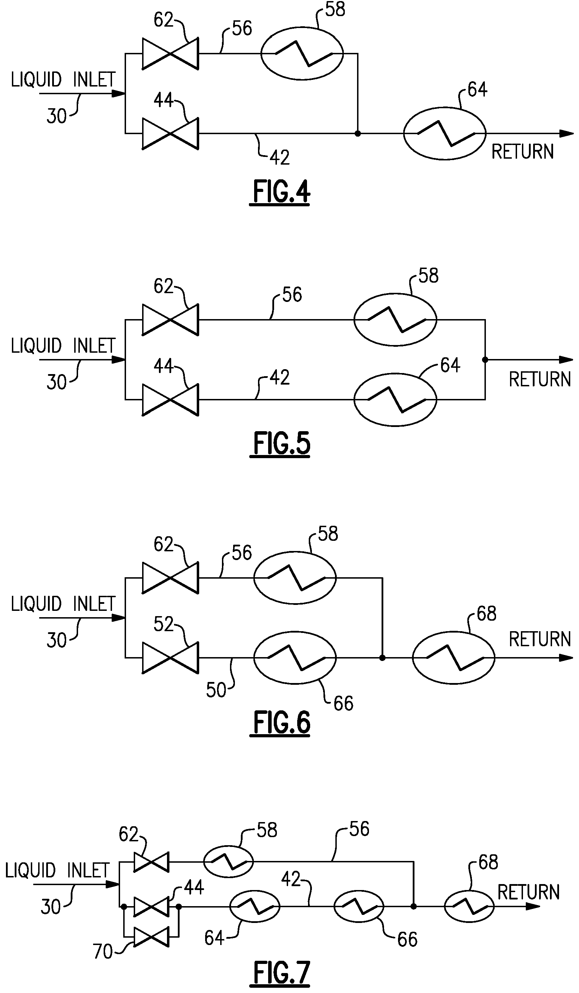

Additional examples include along the first cooling line 42 at a location upstream of an IGBT thermal exchange unit 64 (Figure 4), along the first cooling line 42 at a location downstream of an IGBT thermal exchange unit 64 (Figure 5), or along the second cooling line 50 downstream of a motor cooling circuit 66 and upstream of a bearing/rotor cooling circuit 68 (Figure 6). In another example arrangement, which is shown in Figure 7, the first cooling line 42 includes the IGBT thermal exchange unit 64 upstream of the motor cooling circuit 66. In that example, the third cooling line 56 merges with the first cooling line 42 at a location downstream of the motor cooling circuit 66 and upstream of the bearing/rotor cooling circuit 68. Further, in this example, because valve 44 is associated with fixed orifice 46, an electromechanical valve 70 is arranged in parallel to the valve 44 and orifice 46 (Figure 2). The valve 70 can be opened to permit flow to bypass the valve 44 and orifice 46, thereby permitting additional flow to enter into the system, which is useful in conditions when there is relatively low flow through the valve 44 and orifice 46. Each option may have benefits, such as ease of integration, and/or challenges, such as flow matching, depending on the particular application. Further, Figures 4-7 are highly schematic and only certain components are illustrated. As examples, the orifices 46, 54 associated with valves 44, 52 are not illustrated in Figures 4-7 but are present and arranged substantially as in Figure 2.

It should be understood that directional terms such as "upper" and "top" are used above with reference to the normal operational attitude of the compressor 14 relative to a surface upon which the compressor 14 is mounted (i.e., a ground or floor surface). Further, these terms have been used herein for purposes of explanation, and should not be considered otherwise limiting. Terms such as "generally," "substantially," and "about" are not intended to be boundaryless terms, and should be interpreted consistent with the way one skilled in the art would interpret those terms.

Although the different examples have the specific components shown in the illustrations, embodiments of this disclosure are not limited to those particular combinations. It is possible to use some of the components or features from one of the examples in combination with features or components from another one of the examples. In addition, the various figures accompanying this disclosure are not necessarily to scale, and some features may be exaggerated or minimized to show certain details of a particular component or arrangement.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. A refrigerant system (10), comprising:
a main refrigerant loop (12) in communication with a condenser (16), an evaporator (18), and a compressor (14);
at least one cooling line configured to direct refrigerant (30) from the main refrigerant loop (12) to cool a chamber (40) containing electronic components (32);
**characterized by**
a soft start circuit (38) contained within the chamber (40), wherein insulated-gate bipolar transistors, IGBTs, (34) and a silicon-controlled rectifier, SCR, (36) are also within the chamber (40),
and in that the soft start circuit (38) is arranged vertically above, relative to a ground surface or surface upon which the compressor (14) sits, the IGBTs (34); and
in that the at least one cooling line includes:
a first cooling line (42) configured to direct refrigerant (30) to cool the IGBTs (34) and the SCR (36), and
a second cooling line (50) configured to selectively direct refrigerant (30) to cool a motor (26) of the compressor (14).

2. The refrigerant system (10) as recited in claim 1, wherein the soft start circuit (38) is configured to prevent a sudden current flow during the start of the compressor (14).

3. The refrigerant system (10) as recited in claim 1, wherein a DC-to-DC converter is also within the chamber (40).

4. The refrigerant system (10) as recited in claim 1, wherein the first cooling line (42) includes an electromechanically operated valve (44) selectively opened in response to instructions from a controller (48), and an orifice (46) downstream of the electromechanically operated valve (44) and upstream of both the IGBTs (34) and the SCR (36).

5. The refrigerant system (10) as recited in claim 1, wherein:
the at least one cooling line includes a third cooling line (56) configured to direct refrigerant (30) to cool the soft start circuit (38), and
the first, second, and third cooling lines (42, 50, 56) split from a common source such that the first, second, and third cooling lines (42, 50, 56) are arranged in parallel to one another.

6. The refrigerant system (10) as recited in claim 5, wherein the common source is the main refrigerant loop (12).

7. The refrigerant system (10) as recited in claim 5, wherein the third cooling line (56) includes a thermal exchange unit (58).

8. The refrigerant system (10) as recited in claim 7, wherein the thermal exchange unit (58) includes an evaporator adjacent a blower (60).

9. The refrigerant system (10) as recited in claim 7, wherein the thermal exchange unit (58) includes one or both of fins and coils.

10. The refrigerant system (10) as recited in claim 7, wherein, upstream of the thermal exchange unit (58), the third cooling line (56) includes a flow regulator (62),
optionally wherein the flow regulator (62) is an electronic expansion valve, EXV, selectively opened in response to instructions from the controller (48) based on an output of a temperature sensor (T) arranged in the chamber (40),
optionally wherein the flow regulator (62) is a thermostatic expansion valve, TXV,
optionally wherein the flow regulator (62) is provided by one of a fixed orifice or a capillary tube.

## Patentansprüche

1. Kältemittelsystem (10), umfassend:
ein Hauptkältemittelkreislauf (12), in Verbindung mit einem Kondensator (16), einem Verdampfer (18) und einem Verdichter (14);
mindestens eine Kühlleitung, die konfiguriert ist, um Kältemittel (30) aus dem Hauptkältemittelkreislauf (12) zu leiten, um eine Kammer (40) zu kühlen, die elektronische Komponenten (32) enthält;
**gekennzeichnet durch**
eine Softstartschaltung (38), die innerhalb der Kammer (40) enthalten ist, wobei sich auch Bipolartransistoren mit isoliertem Gate, IGBTs, (34) und ein Silizium-gesteuerter Gleichrichter, SCR, (36) innerhalb der Kammer (40) befinden,
und **dadurch, dass**
die Softstartschaltung (38) vertikal über den IGBTs (34) in Bezug zu einer Bodenfläche oder einer Fläche, auf welcher der Verdichter (14) steht, angeordnet ist; und
**dadurch, dass** die mindestens eine Kühlleitung beinhaltet:
eine erste Kühlleitung (42), die konfiguriert ist, um Kältemittel (30) zu leiten, um die IGBTs (34) und den SCR (36) zu kühlen, und
eine zweite Kühlleitung (50), die konfiguriert ist, um Kältemittel (30) selektiv zu leiten, um einen Motor (26) des Verdichters (14) zu kühlen.

2. Kältemittelsystem (10) nach Anspruch 1, wobei die Softstartschaltung (38) konfiguriert ist, um einen plötzlichen Stromfluss beim Start des Verdichters (14) zu verhindern.

3. Kältemittelsystem (10) nach Anspruch 1, wobei sich auch ein DC/DC-Wandler innerhalb der Kammer (40) befindet.

4. Kältemittelsystem (10) nach Anspruch 1, wobei die erste Kühlleitung (42) ein elektromechanisch betriebenes Ventil (44), das selektiv als Reaktion auf Anweisung einer Steuereinheit (48) geöffnet wird, und eine Öffnung (46) stromabwärts des elektromechanisch betriebenen Ventils (44) und stromaufwärts von beiden der IGBTs (34) und des SCR (36) beinhaltet.

5. Kältemittelsystem (10) nach Anspruch 1, wobei:
die mindestens eine Kühlleitung eine dritte Kühlleitung (56) beinhaltet, die konfiguriert ist, um Kältemittel (30) zu leiten, um die Softstartschaltung (38) zu kühlen, und
die erste, zweite und dritte Kühlleitung (42, 50, 56) von einer gemeinsamen Quelle abzweigen, sodass die erste, zweite und dritte Kühlleitung (42, 50, 56) parallel zueinander angeordnet sind.

6. Kältemittelsystem (10) nach Anspruch 5, wobei die gemeinsame Quelle der Hauptkältemittelkreislauf (12) ist.

7. Kältemittelsystem (10) nach Anspruch 5, wobei die dritte Kühlleitung (56) eine Wärmetauscheinheit (58) beinhaltet.

8. Kältemittelsystem (10) nach Anspruch 7, wobei die Wärmetauscheinheit (58) einen Verdampfer neben einem Gebläse (60) beinhaltet.

9. Kältemittelsystem (10) nach Anspruch 7, wobei die Wärmetauscheinheit (58) eine oder beide von Rippen oder Spulen beinhaltet.

10. Kältemittelsystem (10) nach Anspruch 7, wobei die dritte Kühlleitung (56) stromaufwärts der Wärmetauscheinheit (58) einen Durchflussregler (62) beinhaltet.
wobei der Durchflussregler (62) optional ein elektronisches Expansionsventil, EXV, ist, das als Reaktion auf Anweisungen der Steuereinheit (48) basierend auf einem Ausgang eines in der Kammer (40) angeordneten Temperatursensors (T) selektiv geöffnet wird,
wobei der Durchflussregler (62) optional ein thermostatisches Expansionsventil, TXV, ist,
wobei der Durchflussregler (62) optional entweder durch eines von einer festen Öffnung oder ein Kapillarrohr bereitgestellt wird.

## Revendications

1. Système de réfrigérant (10), comprenant :
une boucle de réfrigérant principale (12) en communication avec un condenseur (16), un évaporateur (18) et un compresseur (14) ;
au moins une ligne de refroidissement configurée pour diriger du réfrigérant (30) de la boucle de réfrigérant principale (12) pour refroidir une chambre (40) contenant des composants électroniques (32) ;
**caractérisé par**
un circuit de démarrage progressif (38) contenu au sein de la chambre (40), dans lequel des transistors bipolaires à grille isolée, IGBT, (34) et un redresseur commandé au silicium, SCR, (36) sont également au sein de la chambre (40),
et en ce que
le circuit de démarrage progressif (38) est agencé verticalement au-dessus, par rapport à une surface au sol ou à une surface sur laquelle le compresseur (14) repose, des IGBT (34) ; et
dans lequel au moins une ligne de refroidissement inclut :
une première ligne de refroidissement (42) configurée pour diriger du réfrigérant (30) pour refroidir les IGBT (34) et le SCR (36), et
une deuxième ligne de refroidissement (50) configurée pour diriger sélectivement du réfrigérant (30) pour refroidir un moteur (26) du compresseur (14).

2. Système de réfrigérant (10) selon la revendication 1, dans lequel le circuit de démarrage progressif (38) est configuré pour empêcher un flux de courant soudain durant le démarrage du compresseur (14).

3. Système de réfrigérant (10) selon la revendication 1, dans lequel un convertisseur CC-CC est également au sein de la chambre (40).

4. Système de réfrigérant (10) selon la revendication 1, dans lequel la première ligne de refroidissement (42) inclut une vanne à commande électromécanique (44) ouverte sélectivement en réponse à des instructions d'un dispositif de commande (48), et un orifice (46) en aval de la vanne à commande électromécanique (44) et en amont à la fois des IGBT (34) et du SCR (36).

5. Système de réfrigérant (10) selon la revendication 1, dans lequel :
l'au moins une ligne de refroidissement inclut une troisième ligne de refroidissement (56) configurée pour diriger du réfrigérant (30) pour refroidir le circuit de démarrage progressif (38), et
les première, deuxième et troisième lignes de refroidissement (42, 50, 56) se divisent à partir d'une source commune de sorte que les première, deuxième et troisième lignes de refroidissement (42, 50, 56) sont agencées en parallèle les unes aux autres.

6. Système de réfrigérant (10) selon la revendication 5, dans lequel la source commune est la boucle de réfrigérant principale (12).

7. Système de réfrigérant (10) selon la revendication 5, dans lequel la troisième ligne de refroidissement (56) inclut une unité d'échange thermique (58).

8. Système de réfrigérant (10) selon la revendication 7, dans lequel l'unité d'échange thermique (58) inclut un évaporateur adjacent à un ventilateur (60).

9. Système de réfrigérant (10) selon la revendication 7, dans lequel l'unité d'échange thermique (58) inclut une ou les deux ailettes et bobines.

10. Système de réfrigérant (10) selon la revendication 7, dans lequel, en amont de l'unité d'échange thermique (58), la troisième ligne de refroidissement (56) inclut un régulateur de débit (62),
facultativement dans lequel le régulateur de débit (62) est une vanne d'expansion électronique, EXV, ouverte sélectivement en réponse à des instructions du dispositif de commande (48) basées sur une sortie d'un capteur de température (T) agencé dans la chambre (40),
facultativement dans lequel le régulateur de débit (62) est une vanne d'expansion thermostatique, TXV,
facultativement dans lequel le régulateur de débit (62) est fourni par un parmi un orifice fixe ou un tube capillaire.
